# EUROPÄISCHE PATENTANMELDUNG

(11) **EP 2 988 265 A1**
(43) Veröffentlichungstag der Anmeldung: **24.02.2016**
(21) Anmeldenummer: 15172471.3
(22) Anmeldetag: 17.06.2015
(51) Int. Cl.: G06Q 30/06

(54) **VORRICHTUNG UND VERFAHREN ZUM KONFIGURIEREN EINES FAHRZEUGS**

(30) Priorität: 21.08.2014 DE 102014216622
(71) Anmelder: Volkswagen Aktiengesellschaft, 38440 Wolfsburg (DE)
(72) Erfinder: Pietsch, Martin, 10115 Berlin (DE); Schäfer, Dirk, 29336 Nienhagen (DE)

(57) **Zusammenfassung**

Ausführungsbeispiele beziehen sich auf eine Vorrichtung 100 zum Konfigurieren eines Fahrzeugs. Die Vorrichtung 100 umfasst eine Schnittstelle 110 zum Empfangen wenigstens eines von einem Nutzer gewünschten ersten Ausstattungsparameters 140 des Fahrzeugs. Die Vorrichtung 100 umfasst zudem einen Datenspeicher 120 zum Speichern einer Mehrzahl zulässiger Fahrzeugkonfigurationen. Eine zulässige Fahrzeugkonfiguration ist durch eine Mehrzahl miteinander kombinierbarer Ausstattungsparameter des Fahrzeugs charakterisiert. Die Vorrichtung 100 umfasst weiterhin einen Prozessor 130 zum Prädizieren einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters 140 und wenigstens einem zweiten Ausstattungsparameter. Dabei ist die potentiell vom Nutzer gewünschte Fahrzeugkonfiguration durch den von dem Nutzer gewünschten ersten Ausstattungsparameter 140 und wenigstens den zweiten Ausstattungsparameter charakterisiert.

## Beschreibung

Die vorliegenden Ausführungsbeispiele liegen auf dem Gebiet der Vorrichtungen und Verfahren zum Konfigurieren eines Fahrzeugs.

Zur Unterstützung eines Nutzers bei einer Auswahl eines Fahrzeugs bei einem Fahrzeuganbieter sind in vielen Fällen Produktkonfiguratoren im Einsatz, welche auf anbieterseitigen Rechnersystemen operieren können. Trotz systemseitiger Unterstützung können Produktkonfigurationsprozesse von dem Nutzer initiierte Abbruchraten aufweisen. Dies kann teilweise darin begründet sein, dass es durch bestimmte Schrittabfolgen während des Prozesses zu Konfigurationszuständen kommen kann, welche einen logischen Widerspruch aufweisen oder einer Einschränkung bezüglich einer Herstellbarkeit unterliegen.

Um dies zu umgehen, können gemäß einer konventionellen Lösung einem Nutzer vordefinierte Fahrzeugkonfigurationen angeboten werden. In der Praxis führt aber auch die Kombination dieser Pakete wiederum zu Konflikten. Für Märkte für seriengefertigte Modelle (BTS-Märkte) können Fahrzeugkonfiguratoren bislang auf Basis von Verkaufszahlen oder vertrieblicher Erfahrung generiert werden. Eine systemseitige Unterstützung zur automatischen Konfiguration auf Basis der Statistik kann jedoch hierbei nicht gegeben sein.

Ferner können gemäß einer herkömmlichen Lösung Algorithmen zur Auflösung von Einschränkungen (Constraint Solver) zum Einsatz kommen. Jedoch können diese eine Laufzeit einer Berechnung nicht vorhersagen und die Laufzeit kann demzufolge ggf. exponentiell steigen. Durch Einsetzen geeigneter Heuristiken kann dieses Problem allenfalls abgeschwächt werden.

Selbst wenn Konfigurationszuständen, die aufgrund eines Widerspruchs oder einer Restriktion einen Abbruch durch den Nutzer erzwingen, auf diese Weise begegnet werden kann, so können anbieterseitige Empfehlungen zu weiteren Eigenschaften auf Basis von bedingten Wahrscheinlichkeiten weiterhin nicht möglich sein. Informationen über Abhängigkeiten oder Einschränkungen zwischen einzelnen Ausstattungsparametern (z.B. Merkmalen, Artikeln oder Attributen eines Fahrzeugs) und eine mögliche Veränderung solcher über die Zeit können dabei möglicherweise unberücksichtigt bleiben. Daher können unter Umständen z.B. Empfehlungen ausgesprochen werden, die möglicherweise nicht baubar sind.

Mithin ist es wünschenswert, ein Konzept für eine Berücksichtigung verfügbarer Informationen durch Automobil-Konfiguratoren zu verbessern und einen Ablauf eines Konfigurationsprozesses zu vereinfachen.

Diesem Bedarf tragen eine Vorrichtung, ein Verfahren und ein Computerprogramm mit den Merkmalen der unabhängigen Patentansprüche Rechnung. Weitere vorteilhafte Ausführungsformen und Weiterbildungen sind Gegenstand der abhängigen Patentansprüche.

Gemäß einem ersten Aspekt beziehen sich Ausführungsbeispiele auf eine Vorrichtung zum Konfigurieren eines Fahrzeugs. Die Vorrichtung umfasst eine Schnittstelle zum Empfangen wenigstens eines von einem Nutzer gewünschten ersten Ausstattungsparameters des Fahrzeugs. Die Vorrichtung umfasst zudem einen Datenspeicher zum Speichern einer Mehrzahl zulässiger Fahrzeugkonfigurationen. Eine zulässige Fahrzeugkonfiguration ist durch eine Mehrzahl miteinander kombinierbarer Ausstattungsparameter des Fahrzeugs charakterisiert. Die Vorrichtung umfasst weiterhin einen Prozessor zum Prädizieren einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters und wenigstens einem zweiten Ausstattungsparameter. Dabei ist die potentiell vom Nutzer gewünschte Fahrzeugkonfiguration durch den von dem Nutzer gewünschten ersten Ausstattungsparameter und wenigstens den zweiten Ausstattungsparameter charakterisiert. Es kann dadurch eine Möglichkeit geschaffen werden, eine Methode auf einen Fahrzeugkonfigurator anzuwenden, welche zusätzlich bewirken kann, dass unerwünschte, widersprüchliche oder nicht zulässige Fahrzeugkonfigurationen bei einer Auswahl einer Konfiguration entfallen können. Dies kann eine Anwendung für einen Nutzer ggf. vereinfachen. Zudem können weitere Kombinationsmöglichkeiten, und damit weitere Fahrzeugkonfigurationen auf möglicherweise einfachere Weise ermittelt werden. Ferner kann dies zu einer Verbesserung einer betrieblichen Logistik führen, was sich wiederum zeit- und kostensparend auswirken kann.

Bei einigen Ausführungsbeispielen ist der Prozessor ferner dazu ausgebildet, eine gespeicherte Fahrzeugkonfiguration, die durch den ersten Ausstattungsparameter und den zweiten Ausstattungsparameter charakterisiert ist, als die potentiell vom Nutzer gewünschte Fahrzeugkonfiguration auszuwählen, wenn die Korrelation des ersten Ausstattungsparameters und des zweiten Ausstattungsparameters einem größeren Wert als eine Korrelation des ersten Ausstattungsparameters und eines dritten Ausstattungsparameters entspricht. Dadurch kann es möglich sein, bereits in der Vergangenheit ausgewählte Fahrzeugkonfigurationen und deren Häufigkeit zu berücksichtigen, und daraus ggf. eine vom Nutzer gewünschte Fahrzeugkonfiguration präziser vorauszusagen.

Bei manchen Ausführungsbeispielen ist der Prozessor ferner dazu ausgebildet, in Folge eines Empfangens des einer ersten Parameterklasse zugeordneten ersten Ausstattungsparameters eine den zweiten Ausstattungsparameter umfassende Parametermenge einer zweiten Parameterklasse in eine den zweiten Ausstattungsparameter umfassende Teilmenge der Parametermenge der zweiten Parameterklasse zu überführen. Dies kann eine Möglichkeit bieten, aufgrund einer zuvor getroffenen Entscheidung des Nutzers für einen vordefinierten Parameter weitere Entscheidungsmöglichkeiten einzugrenzen, oder Widersprüche zu umgehen. Hierbei kann auch eine Wahrscheinlichkeit für eine bevorstehende Auswahl, oder eine technische Realisierbarkeit oder eine werksseitige Empfehlung mit berücksichtigt werden. Dies wiederum kann einen weiteren Auswahlprozess für den Nutzer erleichtern.

Bei einigen Ausführungsbeispielen ist der Prozessor ferner dazu ausgebildet, eine weitere gespeicherte Fahrzeugkonfiguration von einer Prädiktion auszuschließen, wenn die weitere gespeicherte Fahrzeugkonfiguration durch den ersten Ausstattungsparameter und einen der zweiten Parameterklasse zugeordneten, von der Teilmenge der Parametermenge der zweiten Parameterklasse ausgeschlossenen weiteren Ausstattungsparameter charakterisiert ist. Dies kann beispielsweise bedeuten, dass der Fahrzeugkonfiguration ein Datenzusatz zugeordnet wird, welcher Informationen über eine mögliche Baubarkeit umfasst; z.B. kann eine Ziffer "1" auf eine theoretisch mögliche Baubarkeit und eine Ziffer "0" auf eine theoretisch unmögliche Baubarkeit hinweisen. Basierend auf der Information über die Baubarkeit z.B. bei Aufweisen der Ziffer 0 bei einer beliebigen Fahrzeugkonfiguration kann eine Einnahme dieser Konfiguration durch den Prozessor 130 verhindert werden. Anders ausgedrückt kann der Prozessor 130 lediglich aus einer Menge solcher Fahrzeugkonfigurationen die von dem Nutzer potentiell gewünschte Fahrzeugkonfiguration prädizieren, welche die Ziffer 1 aufweisen. Konfigurationen, welche möglicherweise nicht realisierbar sind können auf diese Weise bei einem weiteren Programmablauf eines Fahrzeugkonfigurators ausgeschlossen werden, was den Programmablauf vereinfachen kann.

Bei manchen Ausführungsbeispielen ist der Prozessor ferner dazu ausgebildet, in Folge eines Empfangens eines einer von der ersten Parameterklasse verschiedenen dritten Parameterklasse zugeordneten dritten Ausstattungsparameters die Parametermenge der zweiten Parameterklasse in die Teilmenge der Parametermenge der zweiten Parameterklasse zu überführen. Für eine weitere Auswahl können so unter Umständen auch Synergieeffekte einer Mehrzahl von bereits zuvor getroffenen Parameterauswahlen durch den Nutzer berücksichtigt werden.

Bei einigen Ausführungsbeispielen ist der Prozessor ferner dazu ausgebildet, eine weitere gespeicherte Fahrzeugkonfiguration von einer Prädiktion auszuschließen, wenn die weitere gespeicherte Fahrzeugkonfiguration durch den ersten Ausstattungsparameter, den dritten Ausstattungsparameter und einen der zweiten Parameterklasse zugeordneten, von der Teilmenge der Parametermenge der zweiten Parameterklasse ausgeschlossenen weiteren Ausstattungsparameter charakterisiert ist. Somit können ggf. Synergieeffekte einer Mehrzahl zuvor getroffener Parameterwahlen durch den Nutzer derart berücksichtigt werden, dass dadurch nicht realisierbare Konfigurationen oder solche, die im Vergleich zu einer anderen eine mangelnde Effizienz aufweisen könnten, bei einem weiteren Programmablauf entfallen.

Bei manchen Ausführungsbeispielen ist die Schnittstelle ferner dazu ausgebildet, ein Abfragesignal mit Informationen über die den ersten Ausstattungsparameter umfassende Parametermenge an den Nutzer bereitzustellen. Somit kann eine Möglichkeit geboten werden, dem Nutzer aktuell vorliegende Auswahloptionen zu präsentieren, und somit eine Verwendung eines Fahrzeugkonfigurators zu vereinfachen.

Bei einigen Ausführungsbeispielen ist der Prozessor ferner ausgebildet, ein Korrektursignal zu empfangen, und in Folge des Korrektursignal die Korrelation des von dem Nutzer gewünschten ersten Ausstattungsparameters und wenigstens des zweiten Ausstattungsparameters zu verändern. So können ggf. werks- oder vertriebsseitige Präferenzen bei einer Auswahl an Ausstattungsparametern besser berücksichtigt werden.

Einige Ausführungsbeispiele beziehen sich außerdem auf ein System, umfassend eine Vorrichtung gemäß einem der vorangegangenen Ansprüche und ein programmierbares Gerät. Das programmierbare Gerät umfasst eine weitere Schnittstelle, welche dazu ausgebildet ist, den ersten Ausstattungsparameter an die Schnittstelle bereitzustellen, und die prädizierte Fahrzeugkonfiguration von dem Prozessor zu empfangen. Es kann somit möglich sein, den Prozessor über ein weiteres Gerät anzusteuern. Mit anderen Worten kann ein Nutzer z.B. von einem mobilen Gerät oder ortsfesten Computer, beispielsweise über Netzwerk, auf einen Fahrzeugkonfigurator zugreifen.

Gemäß einem weiteren Aspekt beziehen sich Ausführungsbeispiele auf ein Verfahren zum Konfigurieren eines Fahrzeugs. Das Verfahren umfasst ein Empfangen wenigstens eines von einem Nutzer gewünschten ersten Ausstattungsparameters des Fahrzeugs. Das Verfahren umfasst zudem ein Speichern einer Mehrzahl zulässiger Fahrzeugkonfigurationen. Dabei ist eine zulässige Fahrzeugkonfiguration durch eine Mehrzahl miteinander kombinierbarer Ausstattungsparameter des Fahrzeugs charakterisiert. Das Verfahren umfasst weiterhin ein Prädizieren einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters und wenigstens einem zweiten Ausstattungsparameter. Dabei ist die potentiell vom Nutzer gewünschte Fahrzeugkonfiguration durch den von dem Nutzer gewünschten ersten Ausstattungsparameter und wenigstens den zweiten Ausstattungsparameter charakterisiert. Es kann dadurch eine Methode für ein Konfigurieren eines Fahrzeugs geschaffen werden, welche zusätzlich bewirken kann, dass unerwünschte, widersprüchliche oder nicht zulässige Fahrzeugkonfigurationen bei einer Auswahl einer Konfiguration entfallen können. Zudem können weitere Kombinationsmöglichkeiten, z.B. aufgrund von in der Vergangenheit getroffenen Auswahlen, bevorzugt, und damit eine vom Nutzer gewünschte Fahrzeugkonfigurationen auf möglicherweise einfachere Weise ermittelt werden. Dies kann eine Anwendung für einen Nutzer ggf. vereinfachen.

Darüber hinaus schaffen weitere Ausführungsbeispiele auch ein Programm oder Computerprogramm mit einem Programmcode zum Durchführen des folgenden Verfahrens, wenn der Programmcode auf einem Computer, einem Prozessor oder einer programmierbaren Hardwarekomponente, wie z.B. einer applikationsspezifischen integrierten Schaltung (ASIC), ausgeführt wird.

Nachfolgend werden unter Bezugnahme auf die beigefügten Figuren einige exemplarische Ausführungsbeispiele näher beschrieben und erläutert. Es zeigen im Einzelnen:
- Fig. 1: eine schematische Darstellung einer Vorrichtung zum Konfigurieren eines Fahrzeugs gemäß einem Ausführungsbeispiel;
- Fig. 2: eine schematische Darstellung eines Konfigurationsablaufes gemäß einem Ausführungsbeispiel;
- Fig. 3: eine schematische Darstellung eines Netzwerks zum Ermitteln von Wahrscheinlichkeiten gemäß einem Ausführungsbeispiel; und

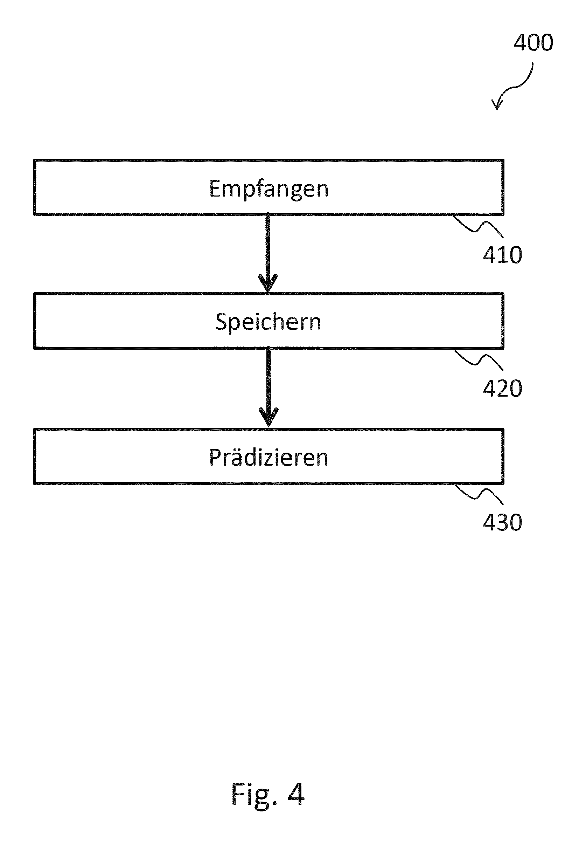

- Fig. 4: eine Ablaufdiagramm eines Verfahrens gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Gemäß herkömmlichen Lösungen kann eine Logik eines Fahrzeugkonfigurators auf einem "Trial-and-Error"-Ansatz beruhen, welcher beispielsweise mit einer Wahl einer Motor-Getriebe-Kombination beginnen kann. Erst darauf kann eine Wahl weiterer Pakete oder Eigenschaften erfolgen. Dabei können Probleme dahingehend auftreten, dass sich der Nutzer durch technische und/oder vertriebliche Zwänge unvermittelt in "Sackgassen" des Konfigurators manövriert. Mit anderen Worten können mehrstufige Prozesse konventioneller Konfiguratoren oftmals erst zu einem späteren Zeitpunkt zu einem zwanghaften Abwählen einer ursprünglich gewählten Eigenschaft führen, was wiederum den gesamten Prozess verkomplizieren oder stören kann. Eine Logik eines konventionellen Konfigurators kann so zu Zwängen im Prozess führen, ohne zuvor dem Nutzer Alternativen aufzuzeigen. Beispielsweise kann der Nutzer bereits zum Einstieg mit einer Wahl eines Reserverades konfrontiert werden, und eine Alternative möglicherweise nicht bestehen. Zudem kann ein beliebiger Nutzer individuelle Prioritären bei der Wahl der Eigenschaften aus den Konfiguratoren haben. Jedoch kann es erforderlich sein, dass sich der Nutzer zunächst für ein konkretes Modell entscheidet und dieses komplett durchkonfiguriert. Kommen dabei für den Verwender unterschiedliche Ausstattungen oder sogar unterschiedliche Modelle in Frage, kann es weiterhin erforderlich werden, dass dieser Vorgang entsprechend oft wiederholt wird; beispielsweise auch, wenn sich der Nutzer in eine oben beschriebene "Sackgasse" manövriert hat. Gegebenenfalls ist dem Nutzer aber ein einzelner Ausstattungsparameter (z.B. Sitzanzahl, Kofferraumvolumen oder ein Vorhandensein einer Anhängerkupplung) wichtiger als das konkrete Modell selbst. Derart flexible oder komplexe Anfragen können von herkömmlichen Fahrzeugkonfiguratoren zumeist nur unbefriedigend bedient werden. So kann beispielsweise eine Auflistung voll spezifizierter möglicher Fahrzeuge anhand der Prioritäten des Nutzers nicht unterstützt sein. Daher kann es unter Umständen nicht möglich sein, dem Nutzer aufgrund seiner bisher getroffenen Entscheidungen konsistente, oder tatsächlich bestellbare Kombinationen weiterer Eigenschaften oder auch voll spezifizierte Fahrzeuge anzubieten, die beispielsweise auch bereits durch andere Nutzer mit hoher Wahrscheinlichkeit gewählt wurden. Ebenso kann es nicht möglich sein, vertriebsseitig z.B. vor oder während der Fahrzeugkonfiguration einen Einfluss auf eine Gewichtung bestimmter Eigenschaften in einer Präsentation zu nehmen. Eine komplizierte und ineffiziente Präsentation einer Mehrzahl an Angeboten für den Nutzer in Build-to-Order-Märkten (BTO) kann eine weitere Folge sein.

Dies kann beispielsweise unerwünscht sein, wenn eine hohe Individualisierung eines von einem Nutzer gewünschten Fahrzeugs angestrebt wird. In herkömmlichen Fahrzeugkonfiguratoren kann dabei lediglich von einem Basismodell ausgegangen werden, welches um weitere Eigenschaften erweitert oder verändert werden kann. Um zu entscheiden, welche Eigenschaften in einer aktuellen Konfiguration baubar sind, kann z.B. eine Simulation mit jeder einzelnen dieser Eigenschaften gestartet, und überprüft werden, ob ein direkter Regelverstoß entsteht. Regelverstöße die sich erst transitiv ergeben, können jedoch unbeachtet bleiben (sog. "Sackgassen" oder "Zyklen"). Kommt es später zu einem Regelverstoß, kann erst über eine weitere Simulationen versucht werden, Alternativen aufzuzeigen. Jedoch selbst diese Alternativen können wiederum in Sackgassen führen (falsch-positive Aussage). Aufgrund dieser falsch-positiven Aussagen zur Baubarkeit der betroffenen Eigenschaften, kann unter Umständen dem Nutzer ein zeitlicher Mehraufwand dabei entstehen, durch Ausprobieren ein vollständig spezifiziertes Fahrzeug aufzufinden. Auch kann es nach herkömmlichen Verfahren der Fall sein, dass der Nutzer in einer vorgegebenen Zeit nicht zu einem wunschgemäß spezifizierten Fahrzeug gelangt, da eine Ausgabe falsch-positiver Ergebnisse und das erst spätere Rückkonfigurieren auf "baubare" Eigenschaften in der vorgegebenen Zeit in eine Endlosschleife führen kann.

Sogenannte Constraint-Solver können dies ggf. beheben, indem sie optimiert durch verschiedene Heuristiken die "Zwänge" der aktuellen Auto Konfiguration vollständig propagieren. Auf diese Weise kann vorab entscheidbar sein, ob eine "Sackgasse" bzw. ein "Zyklus" entsteht. Bei Constraint-Solvern kann jedoch unter Umständen die Laufzeit einer Berechnung nicht vorhergesagt werden, und diese möglicherweise exponentiell ansteigen.

Über ein sogenanntes "Kollaboratives Filtern" kann es ermöglicht werden, Nutzer bei der Auswahl bestimmter Ausstattungsparameter Kaufempfehlungen für andere Ausstattungsparameter aufzuzeigen. Hierzu kann z.B. in einer Verkaufshistorie gesucht werden, welche Artikel andere Nutzer ausgewählt/gekauft haben, nachdem sie sich für einen ersten Artikel bereits entschieden hatten. Dieser Ansatz kann jedoch vernachlässigen, dass Abhängigkeiten/Restriktionen/Constraints zwischen den Artikeln bzw. Ausstattungsparametern bestehen können und sich diese Restriktionen über die Zeit sogar verändern können.

Es können sogenannte Markov-Netze zur Modellierung bedingter Wahrscheinlichkeiten in unterschiedlichen Anwendungen der Künstlichen Intelligenz zum Einsatz kommen. Ein Markov-Netz, auch Markov-Kette oder Markov-Prozess genannt, ist ein stochastischer Prozess. Eine Markov-Kette ist darüber definiert, dass durch Kenntnis einer begrenzten Vorgeschichte ebenso gute Prognosen über eine zukünftige Entwicklung möglich sind wie bei Kenntnis der gesamten Vorgeschichte des Prozesses. Beispielsweise können Markov-Netze eingesetzt werden, um anhand von historischen (Fahrzeug)-Aufträgen eine Vorschau auf einen zukünftigen Bedarf an Bauteilen zu ermöglichen.

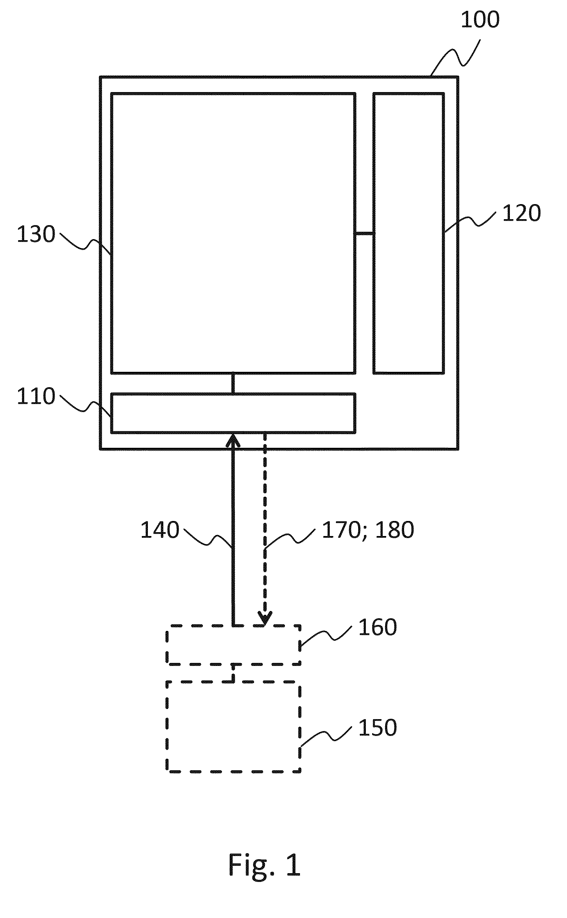

Ausführungsbeispiele beziehen sich daher auf eine, in Fig. 1 dargestellte, Vorrichtung 100 zum Konfigurieren eines Fahrzeugs. Die Vorrichtung 100 umfasst eine Schnittstelle 110 zum Empfangen wenigstens eines von einem Nutzer gewünschten ersten Ausstattungsparameters 140 des Fahrzeugs. Die Vorrichtung 100 umfasst zudem einen Datenspeicher 120 zum Speichern einer Mehrzahl zulässiger Fahrzeugkonfigurationen. Eine zulässige Fahrzeugkonfiguration ist durch eine Mehrzahl miteinander kombinierbarer Ausstattungsparameter des Fahrzeugs charakterisiert. Die Vorrichtung 100 umfasst weiterhin einen Prozessor 130 zum Prädizieren einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters 140 und wenigstens einem zweiten Ausstattungsparameter. Dabei ist die potentiell vom Nutzer gewünschte Fahrzeugkonfiguration durch den von dem Nutzer gewünschten ersten Ausstattungsparameter 140 und wenigstens den zweiten Ausstattungsparameter charakterisiert.

Die Schnittstelle 110 kann eine kabelgebundene oder kabellose Schnittstelle sein. Der erste Ausstattungsparameter 140 kann Informationen über ein von einem Nutzer gewünschtes oder ausgewähltes Merkmal, Attribut oder einen dem Fahrzeug zugeordneten Artikel umfassen Hierzu können Eigenschaften eines für einen Betrieb des Fahrzeugs verwendeten Bauteils zählen, z.B. einen Motor-, Getriebe- oder Reifentyp, oder optionale Ausstattung, z.B. elektrische Fensterheber oder ein Fahrassistenzsystem, oder auch Attribute wie eine Karosseriefarbe oder ein Material eines Sitzbezuges. Der Datenspeicher 120 kann intern oder extern zu dem Prozessor 130 angeordnet sein. Der zweite Ausstattungsparameter kann beispielsweise Informationen über ein bereits zuvor durch den Nutzer gewähltes oder in der Zukunft durch den Nutzer wählbares Merkmal, Attribut oder einen dem Fahrzeug zugeordneten Artikel umfassen.

Die Mehrzahl an zulässigen Fahrzeugkonfigurationen kann alle zulässigen oder baubaren Fahrzeugkonfigurationen umfassen. Selbige Fahrzeugkonfigurationen können jeweils einer Gesamtkonfiguration entsprechen, oder mit anderen Worten, einem vollständig konfigurierten Fahrzeug.

Die Korrelation des ersten Ausstattungsparameters 140 und des zweiten Ausstattungsparameters kann von einer aktuell vorliegenden Fahrzeugkonfiguration umfasst sein. Die aktuell vorliegende Fahrzeugkonfiguration kann dabei einem Fortschritt eines von dem Nutzer durchgeführten Konfigurationsprozesses entsprechen, und eine Teilkonfiguration eines Fahrzeugs repräsentieren. Oder, mit anderen Worten, der erste Ausstattungsparameter 140 kann mit dem zweitem Ausstattungsparameter kombinierbar sein, und zu einer zulässigen Gesamtkonfiguration eines Fahrzeugs führen. Eine Fahrzeugkonfiguration oder Teilkonfiguration kann auch über wenigstens den ersten Ausstattungsparameter 140 charakterisiert sein. Ferner können weitere Ausstattungsparameter existieren, die in Kombination mit dem ersten Ausstattungsparameter 140 zu einer unzulässigen Gesamtkonfiguration eines Fahrzeugs führen können. Eine zulässige Konfiguration kann beispielsweise eine von einem Hersteller angebotene oder eine baubare Kombination von Ausstattungsparametern (im Folgenden auch kurz als "Parameter" bezeichnet) sein.

Unter Berücksichtigung einer Korrelation zwischen dem ersten Parameter und dem zweiten Parameter kann eine Wahrscheinlichkeit für eine Fahrzeugkonfiguration berechnet werden. Beispielsweise kann nach Auswahl des ersten Parameters durch den Nutzer eine Übergangswahrscheinlichkeit zu einer Fahrzeugkonfiguration berechnet werden, welche durch den ersten Parameter und den noch in der Zukunft von dem Nutzer wählbaren zweiten Parameter charakterisiert ist. Die Übergangswahrscheinlichkeit kann somit eine Wahrscheinlichkeit für einen Übergang einer zumindest teilweise durch den ersten Parameter charakterisierten Fahrzeugkonfiguration zu einer zumindest teilweise durch den ersten und den zweiten Parameter charakterisierten Fahrzeugkonfiguration wiedergeben.

Bei einigen Ausführungsbeispielen ist der Prozessor ferner dazu ausgebildet, eine gespeicherte Fahrzeugkonfiguration, die durch den ersten Ausstattungsparameter und den zweiten Ausstattungsparameter charakterisiert ist, als die potentiell vom Nutzer gewünschte Fahrzeugkonfiguration auszuwählen, wenn die Korrelation des ersten Ausstattungsparameters und des zweiten Ausstattungsparameters einem größeren Wert als eine Korrelation des ersten Ausstattungsparameters und eines dritten Ausstattungsparameters entspricht.

Eine Korrelation kann ein Zusammenhang oder eine Abhängigkeit sein. Die Korrelation kann z.B. den Wert ergeben, verändern, oder auch durch diesen gegeben sein. Der Wert kann einer bedingten Wahrscheinlichkeit entsprechen und z.B. ein Zahlenwert der bedingten Wahrscheinlichkeit sein. Die bedingten Wahrscheinlichkeiten können somit z.B. Übergangswahrscheinlichkeiten ausgehend von einer durch den ersten Parameter charakterisierten Fahrzeugkonfiguration (FK 1) sein. Der zweite und der dritte Ausstattungsparameter können beispielsweise alternativ zueinander sein. Demzufolge kann es eine Fahrzeugkonfiguration (FK 1,2) geben, die genau durch den ersten und den zweiten Parameter charakterisiert ist, und alternativ eine Fahrzeugkonfiguration (FK 1,3), die genau durch den ersten und den dritten Parameter charakterisiert ist. Der erste Wahrscheinlichkeitswert, entsprechend dem Übergang von (FK 1) zu (FK 1,2) kann dabei höher sein als der zweite Wahrscheinlichkeitswert, entsprechend dem Übergang von (FK 1) zu (FK 1,3). In diesem Fall kann (FK 1,2) als eine von dem Nutzer potenziell gewünschte Fahrzeugkonfiguration von dem Prozessor prädiziert werden. Dabei können (FK 1,2) und (FK 1,3) in dem Datenspeicher abgelegt sein, und selbigen durch den Prozessor der entsprechende Wahrscheinlichkeitswert zugeordnet werden. Ein Wahrscheinlichkeitswert kann sich dabei dynamisch verändern, oder, mit anderen Worten, entsprechend einer aktuellen Fahrzeugkonfiguration (Teilkonfiguration), einem aktuellen Fortschritt eines Konfigurationsablaufs oder einem weiteren Wert durch den Prozessor verändert werden. Der weitere Wert kann z.B. einer Häufigkeit entsprechen, mit der eine Fahrzeugkonfiguration (z.B. Teilkonfiguration oder auch Gesamtkonfiguration) in der Vergangenheit angenommen worden ist. In der Vergangenheit kann hier einen vordefinierten Zeitraum t bedeuten, der beispielsweise wenigstens ein Jahr umfasst und/oder in der Gegenwart endet. Die Häufigkeit kann wiederum einer Anzahl an bisher verkauften Fahrzeugen mit der entsprechenden Fahrzeugkonfiguration entsprechen. Nochmals anders ausgedrückt kann der Prozessor eine solche Fahrzeugkonfiguration als die von dem Nutzer potentiell gewünschte prädizieren, welche im Vergleich zu anderen Fahrzeugkonfigurationen einem höheren Wahrscheinlichkeitswert zugeordnet ist.

Bei manchen Ausführungsbeispielen erfolgt zunächst ein Prüfen durch den Prozessor 130, ob ein Fahrzeug, welches einer beliebigen Gesamtkonfiguration mit dem ersten Ausstattungsparameter 140 entspricht, baubar ist. Nicht baubare Gesamtkonfigurationen können ggf. ausgeschlossen werden. Baubaren, auf dem Datenspeicher 120 gespeicherten Gesamtkonfigurationen können weiterhin durch den Prozessor 130 Wahrscheinlichkeitswerte zugeordnet werden, die z.B. Informationen über eine Häufigkeit umfassen, mit der diese Fahrzeugkonfigurationen in der Vergangenheit angenommen worden sind. Die Wahrscheinlichkeitswerte können sogar gleich null sein, was einem bisher noch nie durch einen Nutzer bestellten oder verkauften Fahrzeug entsprechen kann. Eine derartige Fahrzeugkonfiguration kann bei einigen Ausführungsbeispielen bisher noch nicht auf dem Datenspeicher 120 gespeichert sein, und erst in Folge eines Einnehmens dieser Fahrzeugkonfiguration durch den Prozessor 130 abgespeichert werden. Ferner können Wahrscheinlichkeitswerte auch Kombinationen aus mehreren weiteren Ausstattungsparametern oder einem einzelnen Ausstattungsparameter zugeordnet sein.

Die bedingte Wahrscheinlichkeit kann somit durch eine Verkaufshistorie beeinflusst werden. Mit anderen Worten kann eine in der Vergangenheit angenommene Fahrzeugkonfiguration die Korrelation beeinflussen. Beispielsweise kann eine erste Korrelation zwischen einer roten Außenfarbe und einem 180-PS-Motor einem größeren Wert entsprechen als eine zweite Korrelation zwischen einer grünen Außenfarbe und einem 180-PS-Motor. Ein Zusammenwirken von Ausstattungsparametern bei der ersten Korrelation kann somit einem Zusammenwirken von Ausstattungsparametern bei der zweiten Korrelation entsprechen, wodurch die den Korrelationen entsprechenden bedingten Wahrscheinlichkeiten für beide Außenfarben zunächst gleich sein können. Jedoch können von dem Nutzer gewünschte Fahrzeugkonfigurationen aus der Vergangenheit z.B. auf eine Präferenz für eine rote Außenfarbe bei Fahrzeugen mit Motorleistungen ab 150 PS hinweisen. Dadurch kann eine bedingte Wahrscheinlichkeit für den zweiten Ausstattungsparameter (z.B. rote Außenfarbe), ausgehend von dem bereits durch den Nutzer gewählten ersten Ausstattungsparameter (z.B. 180-PS-Motor) erhöht werden.

Eine aktuell getroffene Entscheidung des Nutzers für den zweiten Ausstattungsparameter kann wiederum die Korrelation zwischen dem ersten und zweiten Ausstattungsparameter bei einer zukünftigen Einnahme der durch den ersten Ausstattungsparameter charakterisierten Fahrzeugkonfiguration beeinflussen. Somit kann es auch möglich sein, dass die Korrelation bei einer aktuellen Nutzung durch einen aktuellen Nutzer einem anderen Wert entspricht als bei einer zukünftigen Nutzung durch einen zukünftigen Nutzer. Es kann jedoch auch möglich sein, dass ein bisher noch nicht verkauftes Fahrzeug als eine von dem Nutzer potenziell gewünschte Fahrzeugkonfiguration vorgeschlagen wird. Einer diesem Fahrzeug entsprechenden Gesamt- oder Teilkonfiguration kann dabei sogar ein Wahrscheinlichkeitswert von Null zugeordnet sein.

Ferner kann eine werksseitige Systemeinschränkung oder ein Wirkungsgrad einer Synergie zwischen einem ersten und einem zweiten oder dritten Ausstattungsparameter die Korrelation beeinflussen. Beispielsweise kann für einen Nutzer ein erster Ausstattungsparameter, z.B. ein Spoiler oder verbreiterte Reifen in Kombination mit einem zweiten Ausstattungsparameter, z.B. einem 150-PS-Motor eine effizientere Kombination bilden als mit einem dritten Ausstattungsparameter, z.B. einem 60-PS-Motor, obwohl beide Kombinationen gemäß einer theoretischen Überlegung baubar sein könnten. Die bedingte Wahrscheinlichkeit für eine durch den zweiten Ausstattungsparameter charakterisierte Fahrzeugkonfiguration kann demnach höher sein als die bedingte Wahrscheinlichkeit für eine durch den dritten Ausstattungsparameter charakterisierte Fahrzeugkonfiguration.

Zudem kann ein aktuelles Angebot an Bauteilen oder Werkstoffen eine Korrelation beeinflussen. Ist beispielsweise ein Angebot eines vorgegebenen Fahrassistenzsystems höher als eine aktuelle Nachfrage nach dem Fahrassistenzsystem, kann entsprechend eine bedingte Wahrscheinlichkeit für eine Fahrzeugkonfiguration mit dem Fahrassistenzsystem erhöht werden. Ist das Angebot kleiner, kann entsprechend die Wahrscheinlichkeit verringert werden. Hierzu kann der Prozessor eine Eingangsschnittstelle aufweisen, welche dazu ausgebildet ist, ein Korrektursignal zu empfangen. Durch das Korrektursignal kann ein Verändern eines der Korrelation entsprechenden Wertes bewirkt werden. Das Korrektursignal kann optional von einem weiteren Nutzer, z.B. über ein entsprechendes Eingabegerät oder ein externes programmierbares Gerät (mit anderen Worten vertriebsseitig) bereitgestellt werden.

Bei manchen Ausführungsbeispielen ist der Prozessor ferner dazu ausgebildet, in Folge eines Empfangens des einer ersten Parameterklasse zugeordneten ersten Ausstattungsparameters eine den zweiten Ausstattungsparameter umfassende Parametermenge einer zweiten Parameterklasse in eine den zweiten Ausstattungsparameter umfassende Teilmenge der Parametermenge der zweiten Parameterklasse zu überführen. Beispielsweise kann eine Parameterklasse einen Oberbegriff repräsentieren, z.B. "Motorleistung". Ferner kann eine Parametermenge eine Anzahl an zueinander optionalen Auswahlmöglichkeiten umfassen, z.B. "60 PS", "100 PS", "150 PS", etc. Eine Auswahlmöglichkeit entspricht dabei einem Ausstattungsparameter. Die Teilmenge kann demnach eine Anzahl an zueinander optionalen und aktuell zulässigen Auswahlmöglichkeiten umfassen. Eine Zulässigkeit kann hierbei durch eine zuvor getroffene Wahl (des ersten Parameters) bedingt sein. So kann beispielsweise ein vordefinierter Motortyp eine Auswahl an verschiedenen Getriebearten eingrenzen.

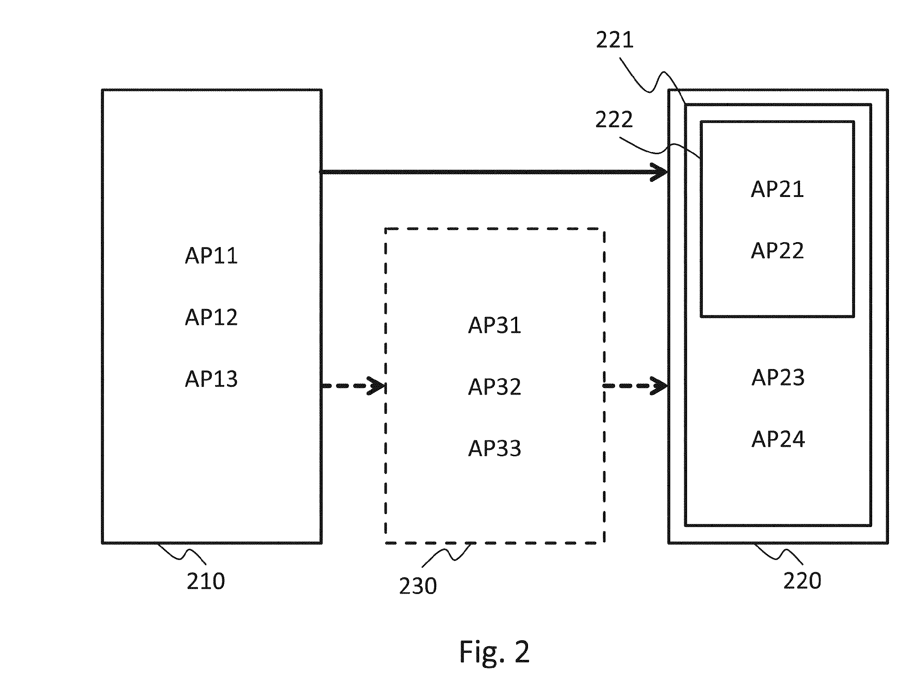

In Fig. 2 ist dies schematisch verdeutlicht. Der ersten Parameterklasse 210 sind die Parameter AP11, AP12 und AP13 zugeordnet. Der zweiten Parameterklasse 220 sind die Parameter AP21, AP22, AP23 und AP24 zugeordnet. Vor einer Auswahl eines Parameters der ersten Parameterklasse 210 kann eine Parametermenge 221 zunächst die Parameter AP21, AP22, AP23 und AP24 umfassen. Bei einer erfolgten Auswahl von A11 kann z.B. die Parametermenge 221 in die Teilmenge 222 überführt werden, welche lediglich die Parameter AP21 und AP22 umfasst.

Der Prozessor ist dazu ausgebildet, eine weitere gespeicherte Fahrzeugkonfiguration von einer Prädiktion auszuschließen, wenn die weitere gespeicherte Fahrzeugkonfiguration durch den ersten Ausstattungsparameter, z.B. AP11 und einen der zweiten Parameterklasse zugeordneten, von der Teilmenge der Parametermenge der zweiten Parameterklasse ausgeschlossenen weiteren Ausstattungsparameter, z.B. AP23 charakterisiert ist. Dies kann beispielsweise bedeuten, dass der Fahrzeugkonfiguration ein Datenzusatz zugeordnet wird, welcher Informationen über eine mögliche Baubarkeit umfasst; z.B. kann eine Ziffer "1" auf eine theoretisch mögliche Baubarkeit und eine Ziffer "0" auf eine theoretisch unmögliche Baubarkeit hinweisen. Basierend auf der Information über die Baubarkeit z.B. bei Aufweisen der Ziffer 0 bei einer beliebigen Fahrzeugkonfiguration kann eine Einnahme dieser Konfiguration durch den Prozessor verhindert werden. Anders ausgedrückt kann der Prozessor lediglich aus einer Menge solcher Fahrzeugkonfigurationen die von dem Nutzer potentiell gewünschte Fahrzeugkonfiguration prädizieren, welche die Ziffer 1 aufweisen.

Somit können Fahrzeugkonfigurationen, die durch die Parameter AP11 und AP21 oder durch AP11 und AP22 charakterisiert sind, jeweils einen Datenzusatz mit Informationen über eine bestehende Baubarkeit aufweisen. Anders ausgedrückt kann dann beispielsweise eine Fahrzeugkonfiguration, die durch AP11 und AP23 charakterisiert ist, einen Datenzusatz mit Information über eine nicht gegebene Baubarkeit. Alternativ kann bei anderen Ausführungsbeispielen in Folge einer Auswahl von AP 12 die Parametermenge 221 in eine andere Teilmenge überführt werden, welche lediglich AP22, AP23 und AP24 umfasst, oder bei einer Auswahl von AP 13 weiterhin unverändert bleiben.

Weiterhin sind in Fig. 2 durch gestrichelte Linien und Pfeile optionale Merkmale dargestellt. So ist bei manchen Ausführungsbeispielen der Prozessor ferner dazu ausgebildet, in Folge eines Empfangens eines einer von der ersten Parameterklasse 210 verschiedenen dritten Parameterklasse 230 zugeordneten dritten Ausstattungsparameters die Parametermenge 221 der zweiten Parameterklasse 220 in die Teilmenge 222 der Parametermenge 221 der zweiten Parameterklasse 220 zu überführen. Mit anderen Worten kann die Parametermenge 221 nach einer Auswahl von AP11, AP12 oder AP13 unverändert bleiben, und beispielsweise eine Kombination aus AP11 und AP31 die Überführung in die Teilmenge 222 bewirken. Alternativ kann eine Kombination von AP12 und AP31 keine Einschränkung, jedoch eine Kombination von AP12 und P32 die Überführung bewirken. Mit anderen Worten kann die Überführung durch eine Kombination zweier Parameter bewirkt werden, die unterschiedlichen Parameterklassen zugeordnet sind. Entsprechend kann eine Fahrzeugkonfiguration, welche durch die besagte Kombination (z.B. AP12 und AP32) und einen von der Teilmenge 222 ausgeschlossenen Parameter (z.B. AP24) charakterisiert ist, einen Datenzusatz mit Information über eine nicht gegebene Baubarkeit erhalten.

Bei einem Ausführungsbeispiel können die in Fig. 2 dargestellten Parameterklassen in Form eines Auswahlmenüs an den Nutzer bereitgestellt werden. Bei Auswahl eines Parameters der ersten Parameterklasse 210 kann ein Abfragesignal zu einer Wahl eines Parameters der zweiten oder dritten Parameterklasse (220; 230) von dem Prozessor an ein dem Nutzer zugeordnetes Gerät ausgegeben, und beispielsweise somit an den Nutzer bereitgestellt werden.

Hierfür kann ein System vorhanden sein, wie es in Fig. 1 dargestellt ist. Gestrichelte Linien und Pfeile deuten wiederum optionale Komponenten an. Das System umfasst die Vorrichtung 100 sowie ein dem Nutzer zugeordnetes programmierbares Gerät 150. Das programmierbare Gerät 150 weist eine weitere Schnittstelle 160 auf, die mit der Schnittstelle 110 drahtlos oder drahtgebunden verbunden ist. Mit anderen Worten können Signale zwischen Schnittstelle 110 und weiterer Schnittstelle 160 ausgetauscht werden. Die weitere Schnittstelle 160 kann intern oder, wie in Fig. 1 gezeigt, extern zu dem programmierbaren Gerät 150 angeordnet sein. Das programmierbare Gerät 150 kann dazu ausgebildet sein, den ersten Ausstattungsparameter 140 an die Schnittstelle 110 bereitzustellen, und die prädizierte Fahrzeugkonfiguration 170 oder ein Abfragesignal 180 mit Informationen über die den ersten Ausstattungsparameter umfassende Parametermenge von dem Prozessor 130 zu empfangen. Das programmierbare Gerät 150 kann z.B. ein Computer, Laptop, Smartphone, Tablet oder ein weiteres mobiles Gerät sein. Die Vorrichtung 100 kann z.B. ein Datenserver oder zentraler Rechner sein. Ein Datenaustausch der Schnittstelle 110 mit der weiteren Schnittstelle 160 kann z.B. über Internet erfolgen.

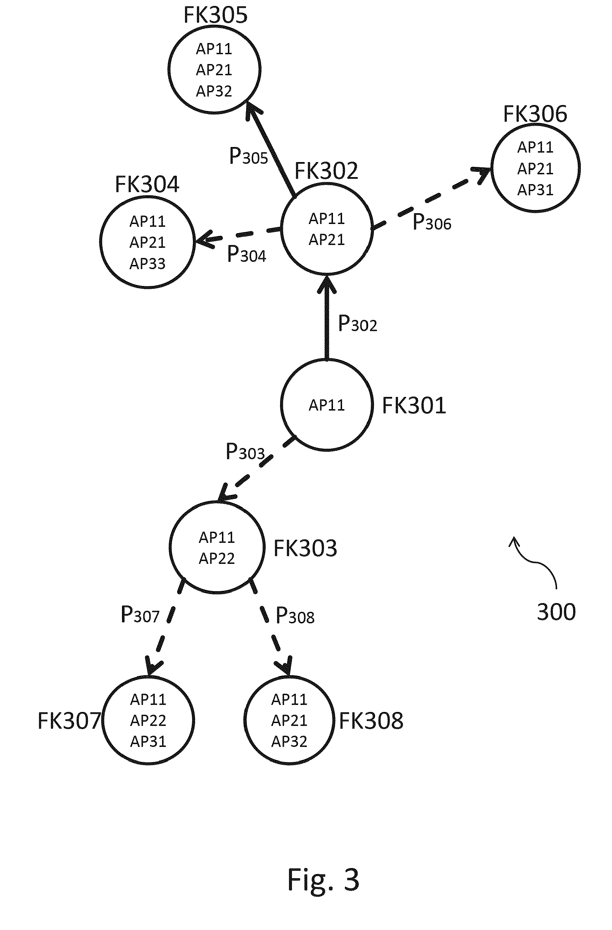

Fig. 3 zeigt ein Markov-Netzwerk 300, welches verwendet werden kann, um eine von dem Nutzer potenziell gewünschte Fahrzeugkonfiguration zu ermitteln. Anders ausgedrückt kann das Markov-Netzwerk 300 als Plattform für einen Produkt- oder Fahrzeugkonfigurator verwendet werden. Dabei stellt eine Fahrzeugkonfiguration einen Zustand in dem Markov-Netzwerk 300 dar. Es sind mit FK301 bis FK308 verschiedene Fahrzeugkonfigurationen gekennzeichnet, und mit AP11, AP21, AP22, etc. die jeweiligen Ausstattungsparameter, die diese charakterisieren. Ausgangspunkt ist dabei eine beliebige Fahrzeugkonfiguration 301. Fahrzeugkonfiguration 301 ist durch den ersten Parameter AP11 charakterisiert. Davon ausgehend können weitere Parameter durch den Nutzer ausgewählt werden, die jeweils zu FK302 oder FK303 führen. Dabei ist P₃₀₂ die Übergangswahrscheinlichkeit zu FK302, und P₃₀₂ die Übergangswahrscheinlichkeit zu FK303. Es sei im Folgenden P₃₀₂ > P₃₀₃, was durch einen durchgezogenen Pfeil für P₃₀₂ und einen gestrichelten Pfeil für P₃₀₃ verdeutlicht ist, und P₃₀₂, P₃₀₃ jeweils ungleich null. Der Prozessor kann nun FK302 aufgrund der höheren Übergangswahrscheinlichkeit als die von dem Nutzer potenziell gewünschte Fahrzeugkonfiguration prädizieren. Jedoch kann der Nutzer weiterhin eine Entscheidung für Ausstattungsparameter AP22 treffen, und ein entsprechendes Eingabesignal an den Prozessor übermitteln. In diesem Fall kann der Prozessor Wahrscheinlichkeiten für Folgeentscheidungen, oder anders ausgedrückt, die Übergangswahrscheinlichkeiten P₃₀₇ und P₃₀₈ für FK307 und FK308 basierend auf der Wahl des Parameters AP22 ermitteln. Der Nutzer kann ferner sogar für einen anderen Fall, bei dem P₃₀₃ gleich null ist, FK303 auswählen. Optional kann sich bei einer Entscheidung eines Nutzers für eine gegebene Fahrzeugkonfiguration eine Information über eine Baubarkeit einer weiteren Fahrzeugkonfiguration ändern, oder mit anderen Worten, in Folge einer zuletzt getroffenen Auswahl eines Parameters durch den Nutzer, nicht mehr baubar sein, so wie es anhand von Fig. 2 beschrieben ist.

Wählt der Nutzer hingegen als weiteren Ausstattungsparameter AP21, kann der Prozessor die Fahrzeugkonfiguration FK302 als aktuellen Zustand annehmen, und die Übergangswahrscheinlichkeiten P₃₀₄, P₃₀₅ und P₃₀₆ für FK304, FK305 und FK306 ermitteln, oder bereits ermittelte Übergangswahrscheinlichkeiten für diese Fahrzeugkonfigurationen korrigieren. Die Übergangswahrscheinlichkeiten P₃₀₄, P₃₀₅ und P₃₀₆ können somit bedingte Wahrscheinlichkeiten darstellen, bei denen das Eintreten des Zustandes FK302 bereits vorausgesetzt ist. Ebenso können die Übergangswahrscheinlichkeiten P₃₀₇ und P₃₀₈ somit bedingte Wahrscheinlichkeiten darstellen, bei denen das Eintreten des Zustandes FK303 vorausgesetzt ist. Ausgehend von FK302 kann beispielsweise P₃₀₅ > P₃₀₆ > P₃₀₄, und P₃oa= 0 gelten. Mit anderen Worten stellt in diesem Falle FK305 die von dem Nutzer potenziell gewünschte, von dem Prozessor prädizierte Fahrzeugkonfiguration dar, und FK306 eine weitere Option. FK304 kann hierbei z.B. eine Fahrzeugkombination darstellen die in der Vergangenheit noch nie gewählt worden ist, wodurch der Prozessor deren Wahrscheinlichkeit zu null berechnet. Beispielsweise kann auch eine redundante oder ineffiziente Kombinantion von Ausstattungsparametern zu einer Übergangswahrscheinlichkeit von null für diese Fahrzeugkonfiguration führen. Hingegen kann eine in der Vergangenheit gegenüber einer anderen Fahrzeugkonfiguration häufiger gewählte Konfiguration zur Berechnung einer erhöhten Übergangswahrscheinlichkeit führen, ebenso wenn eine potenziell gewünschte Konfiguration durch einen Ausstattungsparameter charakterisiert ist, der sich effizient mit einem bereits gewählten Parameter kombinieren ließe (mit anderen Worten kann ein Nutzer z.B. bei Wahl eines vergleichsweise leistungsstarken Motors eine größere Nennbreite der Reifen bevorzugen).

Darüber hinaus können weitere Ausführungsbeispiele optional oder alternativ implementiert werden, welche hier lediglich beispielhaft und keineswegs einschränkend dargestellt werden. Gemäß einem Ausführungsbeispiel kann eine Parametrisierung einer Wahrscheinlichkeitsverteilung wenigstens teilweise von einem Eingabesignal eines Nutzers abhängen. Hierbei kann eine dynamische Anpassung von Übergangswahrscheinlichkeiten erfolgen. Das Eingabesignal kann z.B. eine Information über eine Nutzerpräferenz umfassen, welche wiederum eine Korrelation zu einer Gruppe von Ausstattungsparametern bildet. Die Gruppe von Ausstattungsparametern kann dabei mehrere Parameterklassen umfassen, und eine Übergangswahrscheinlichkeit zu einer Fahrzeugkonfiguration erhöhen welche durch einen Ausstattungsparameter aus der Gruppe charakterisiert ist. Die Nutzerpräferenz kann mit anderen Worten ein "weiches Kriterium" wie z.B. "sportlich" sein, welches die Wahrscheinlichkeiten für vergleichsweise große Motoren, Sportfahrwerk oder Sportsitze erhöht. Bei dem Markov-Netz können dann bei einem weiterführenden Ausführungsbeispiel auch bedingte Wahrscheinlichkeiten abhängiger Eigenschaften (z.B. DSG-Getriebe, Schaltwippen am Lenkrad, etc.) transitiv berechnet oder korrigiert werden. Ferner kann die Nutzerpräferenz auch über einen weiteren, mit dem Prozessor verbundenen Rechner zur Verfügung gestellt werden. Dieser weitere Rechner kann beispielsweise ein weiterer Datenserver sein, und die Kundenpräferenz z.B. basierend auf einem Social Media Profil, einem Webtracker, einer Kundenhistorie etc. ermitteln.

Der Prozessor kann überdies bei weiteren Ausführungsbeispielen dazu ausgebildet sein, ein Visualisierungssignal an ein nutzerseitiges programmierbares Gerät bereitzustellen. Das Visualisierungssignal kann eine visuelle Darstellung der von dem Nutzer potenziell gewünschten Fahrzeugkonfiguration durch das programmierbare Gerät derart veranlassen, dass die visuelle Darstellung für den Nutzer dreidimensional erscheint, oder, mit anderen Worten, ein Rendering der Darstellung veranlassen. Alternative Vorschläge können optional an den Nutzer bereitgestellt werden. Dies kann eine Auswahl für den Nutzer ggf. vereinfachen.

Ferner kann eine prädizierte Fahrzeugkonfiguration einem bereits vorgefertigten Fahrzeug (Lagerfahrzeug) entsprechen. Der Prozessor kann optional dazu ausgebildet sein, ein Verfügbarkeitssignal an den Nutzer bereitzustellen. Anders ausgedrückt könnte ein von dem Verfügbarkeitssignal umfasster Vermerk darauf hinweisen, dass dieses Fahrzeug bereits verfügbar ist. Das Verfahren kann bei Produkt- oder Fahrzeugkonfiguratoren sowohl internetgestützt (online), in einem Show Room als auch an einem vertriebsseitigen Arbeitsplatz zur Unterstützung eines Verkäufers bei einer Suche nach geeigneten Produkten oder Fahrzeugmodellen eingesetzt werden.

Gemäß einem weiteren Aspekt beziehen sich Ausführungsbeispiele auf ein Verfahren 400 zum Konfigurieren eines Fahrzeugs. Das Verfahren 400 umfasst ein Empfangen 410 wenigstens eines von einem Nutzer gewünschten ersten Ausstattungsparameters des Fahrzeugs. Das Verfahren 400 umfasst zudem ein Speichern 420 einer Mehrzahl zulässiger Fahrzeugkonfigurationen. Dabei ist eine zulässige Fahrzeugkonfiguration durch eine Mehrzahl miteinander kombinierbarer Ausstattungsparameter des Fahrzeugs charakterisiert. Das Verfahren 400 umfasst weiterhin ein Prädizieren 430 einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters und wenigstens einem zweiten Ausstattungsparameter. Dabei ist die potentiell vom Nutzer gewünschte Fahrzeugkonfiguration durch den von dem Nutzer gewünschten ersten Ausstattungsparameter und wenigstens den zweiten Ausstattungsparameter charakterisiert. Es kann dadurch eine Methode für ein Konfigurieren eines Fahrzeugs geschaffen werden, welche zusätzlich bewirken kann, dass unerwünschte, widersprüchliche oder nicht zulässige Fahrzeugkonfigurationen bei einer Auswahl einer Konfiguration entfallen können. Zudem können weitere Kombinationsmöglichkeiten, z.B. aufgrund von in der Vergangenheit getroffenen Auswahlen, bevorzugt, und damit eine vom Nutzer gewünschte Fahrzeugkonfigurationen auf möglicherweise einfachere Weise ermittelt werden. Dies kann eine Anwendung für einen Nutzer ggf. vereinfachen.

Durch Verwendung des beispielhaft in Fig. 3 schematisierten Markov-Netzes auf einen Produkt- oder Fahrzeugkonfigurator können Eigenschaften und Abhängigkeiten eines Angebotsprogramms in einer konsistenten Struktur abgebildet werden, und eine Effizienz eines Konfigurationsprozesses möglicherweise verbessert werden. Mithilfe des Markov-Netzes können von dem Nutzer potenziell gewünschte Fahrzeugkonfigurationen als Kaufempfehlungen ausgegeben werden, die inhärent baubar sind. Falsch-positive Aussagen zu einer Baubarkeit können so vermieden werden. Zudem können Zyklen und Sackgassen eines Konfigurationsprozessablaufs vermieden werden, da die Baubarkeit anderer Eigenschaften auf Basis der aktuellen Konfiguration unmittelbar feststellbar ist. Durch diese sogenannte "vollständige Propagation" können auch direkte und indirekte alternativlose Zwänge aufgelöst werden.

Bei einem Ausführungsbeispiel kann der Nutzer zunächst unabhängig von Ausstattungsparametern einen beliebigen Einstiegspunkt in die Konfiguration wählen, und der Prozessor in Reaktion auf den gewählten Einstiegspunkt Informationen zu potenziell gewünschten Fahrzeugkonfigurationen bereitstellen, oder mit anderen Worten z.B. modellgruppenübergreifend passende Fahrzeuge anbieten. Mit individuellen (als Ausstattungsparameter wählbaren) Anforderungen oder Bedingungen des Nutzers kann dieser so sukzessive das Angebotsprogramm einschränken und zu der von ihm gewünschten Fahrzeugkonfiguration gelangen. Ein möglicherweise überflüssiges Konfigurieren mehrerer Modelle auf einem festgelegten Pfad kann dabei eventuell umgangen werden. Hierbei kann es auch möglich sein, nicht-diskrete Eigenschaften wie z.B. eine CO2-Emission, ein Kofferraumvolumen, eine Maximal-Geschwindigkeit, etc. konsistent zu berechnen und ggf. einzuschränken.

Die von dem Nutzer potenziell gewünschte Fahrzeugkonfiguration kann auf Basis einer Gesamtwahrscheinlichkeitsverteilung berechnet werden. Herkömmliche Systeme konnten lediglich die Einzelwahrscheinlichkeiten unabhängig voneinander betrachten. Durch Ausführungsbeispiele können z.B. Vorschläge von Eigenschaftskombinationen vermieden werden, bei denen zwar jeweils die Einbauraten oder Wahrscheinlichkeiten der einzelnen Eigenschaften in der Historie vergleichsweise hoch waren, die Kombination dieser Eigenschaften in ihrer Gesamtheit aber vergleichsweise selten gewählt wurde.

Bei einigen Ausführungsbeispielen ist der Prozessor ferner ausgebildet, ein Korrektursignal zu empfangen, und in Folge des Korrektursignal die Korrelation des von dem Nutzer gewünschten ersten Ausstattungsparameters und wenigstens des zweiten Ausstattungsparameters zu verändern. Mit anderen Worten, bei einer Änderung einzelner Wahrscheinlichkeiten können beispielhaft durch Markov-Netze Auswirkungen auf weitere abhängige Wahrscheinlichkeiten berücksichtigt, und diese während des Konfigurationsprozesses angepasst werden. Auf diese Weise kann es auch ermöglicht werden, vertriebsseitig beliebigen, ggf. konsistenten Einfluss auf eine als Kaufempfehlung präsentierte, potenziell von dem Nutzer gewünschte Fahrzeugkonfiguration zu nehmen. Beispielsweise kann so ein Überangebot an Bauteilen berücksichtigt werden, oder der Nutzer auf eine weitere Auswahlmöglichkeit aufmerksam gemacht werden.

Bei manchen Ausführungsbeispielen können ferner Beziehungen der Ausstattungsparameter untereinander aus einem vorgegebenen technischen oder vertrieblichen Regelwerk abgeleitet werden. Optional oder zusätzlich kann eine Struktur mit den Einbauraten der Vergangenheit (mit anderen Worten, in der Vergangenheit von weiteren Nutzern gewünschten Fahrzeugkonfigurationen) abgespeichert werden. Aus dem hierauf basierenden Markov-Netz können teil- oder vollspezifizierte Bauaufträge generiert werden. Auf diese Weise können auch z.B. Lagerfahrzeuge für eine Fertigung auf Vorrat (Build-To-Stock-Märkte; BTS) generiert werden.

Durch Ausführungsbeispiele kann möglicherweise erzielt werden, dass Ressourcen besser oder sogar optimal genutzt werden, ein Konfigurationsprozess effizienter gestaltet wird, und dies ggf. zu einer Zeit- und Kostenersparnis für den Nutzer, den Vertrieb oder die Logistik führt. Ferner können additive oder synergistische Effekte mehrerer Ausstattungsparameter besser berücksichtigt, und so unter Umständen eine verbesserte oder sogar optimale Verwendung von Ressourcen, oder auch eine Zeit- oder Kostenersparnis erfolgen. Ausführungsbeispiele können, auch bei weiteren Märkten, eine Möglichkeit eines Einsatzes unabhängig von einem jeweilig vorherrschenden Vertriebsmodell, oder auch einer effizienteren Kundenansprache oder Vertriebssteuerung bieten.

Durch Ausführungsbeispiele können möglicherweise dem Nutzer intuitivere Möglichkeit geboten werden, ein von ihm gewünschtes Produkt oder Fahrzeug anhand seiner Vorgaben direkt in baubarer Weise und zeitsparend zu ermitteln. Dabei können an den Nutzer dynamisch Empfehlungen von Fahrzeugkonfigurationen auf Basis von in der Vergangenheit gewählten Konfigurationen anderer Nutzer bereitgestellt werden, oder ein potenziell gewünschtes, vollständig spezifiziertes und baubares Produkt oder Fahrzeug direkt berechnet werden. Ferner kann es ermöglicht werden, vertriebsseitig Einfluss auf eine Prädiktion einer potenziell von dem Nutzer gewünschten Fahrzeugkonfiguration zu nehmen, was eventuell zu einer verbesserten Propagation eines Angebots an den Nutzer führen kann. Darüber hinaus kann ggf. eine Logistik von Fahrzeugteilen, Fahrzeugbau oder Bestellungen, optional auch bei anderen Produkten oder Teilen davon, verbessert oder optimiert werden.

Durch Ausführungsbeispiele kann eine Präsenz vorbestimmter Eigenschaften eines Fahrzeugs (z.B. Ausstattungen, Farben) über eine Wahrscheinlichkeitsverteilung in einem Markov-Netz gesteuert werden. Es kann zunächst von einer aktuellen Wahrscheinlichkeitsverteilung aus einer Verkaufshistorie ausgegangen werden. Es ist aber auch möglich, z.B. auf individuellen Plan-Vorgaben etc. aufzubauen. Abhängigkeiten der Wahrscheinlichkeit eines Ausstattungsparameters zu Wahrscheinlichkeiten anderer Ausstattungsparameter können konsistent berücksichtigt werden, z.B. Abhängigkeiten von einem Navigationssystem, einem Radio oder einem Multifunktionslenkrades untereinander. Das Netz kann im Echtzeitbereich arbeiten, wodurch eine Arbeitsgeschwindigkeit erhöht werden kann.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Vorrichtung
- 110: Schnittstelle
- 120: Datenspeicher
- 130: Prozessor
- 140: Erster Ausstattungsparameter
- 150: Programmierbares Gerät
- 160: Weitere Schnittstelle
- 210: Erste Parameterklasse
- 220: Zweite Parameterklasse
- 221: Parametermenge
- 222: Teilmenge
- 230: Dritte Parameterklasse
- 300: Markov-Netz
- 400: Verfahren
- 410: Empfangen
- 420: Speichern
- 430: Prädizieren

## Patentansprüche

1. Vorrichtung (100) zum Konfigurieren eines Fahrzeugs, umfassend:
eine Schnittstelle (110) zum Empfangen wenigstens eines von einem Nutzer gewünschten ersten Ausstattungsparameters (140) des Fahrzeugs;
einen Datenspeicher (120) zum Speichern einer Mehrzahl zulässiger Fahrzeugkonfigurationen, wobei eine zulässige Fahrzeugkonfiguration durch eine Mehrzahl miteinander kombinierbarer Ausstattungsparameter des Fahrzeugs charakterisiert ist; und
einen Prozessor (130) zum Prädizieren einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters (140) und wenigstens einem zweiten Ausstattungsparameter, wobei die potentiell vom Nutzer gewünschte Fahrzeugkonfiguration durch den von dem Nutzer gewünschten ersten Ausstattungsparameter (140) und wenigstens den zweiten Ausstattungsparameter charakterisiert ist.

2. Vorrichtung (100) nach Anspruch 1, wobei der Prozessor (130) ferner dazu ausgebildet ist, eine gespeicherte Fahrzeugkonfiguration, die durch den ersten Ausstattungsparameter (140) und den zweiten Ausstattungsparameter charakterisiert ist, als die potentiell vom Nutzer gewünschte Fahrzeugkonfiguration auszuwählen, wenn die Korrelation des ersten Ausstattungsparameters und des zweiten Ausstattungsparameters einem größeren Wert als eine Korrelation des ersten Ausstattungsparameters (140) und eines dritten Ausstattungsparameters entspricht.

3. Vorrichtung (100) gemäß einem der vorangegangenen Ansprüche, wobei der Prozessor (130) ferner dazu ausgebildet ist, in Folge eines Empfangens des einer ersten Parameterklasse (210) zugeordneten ersten Ausstattungsparameters (140) eine den zweiten Ausstattungsparameter umfassende Parametermenge (221) einer zweiten Parameterklasse (220) in eine den zweiten Ausstattungsparameter umfassende Teilmenge (222) der Parametermenge (221) der zweiten Parameterklasse (220) zu überführen.

4. Vorrichtung (100) gemäß Anspruch 3, wobei der Prozessor (130) ferner dazu ausgebildet ist, eine weitere gespeicherte Fahrzeugkonfiguration von einer Prädiktion auszuschließen, wenn die weitere gespeicherte Fahrzeugkonfiguration durch den ersten Ausstattungsparameter (140) und einen der zweiten Parameterklasse (220) zugeordneten, von der Teilmenge (222) der Parametermenge (221) der zweiten Parameterklasse (220) ausgeschlossenen weiteren Ausstattungsparameter charakterisiert ist.

5. Vorrichtung (100) gemäß Anspruch 3 oder 4, wobei der Prozessor (130) ferner dazu ausgebildet ist, in Folge eines Empfangens eines einer von der ersten Parameterklasse (210) verschiedenen dritten Parameterklasse (230) zugeordneten dritten Ausstattungsparameters die Parametermenge (221) der zweiten Parameterklasse (220) in die Teilmenge (222) der Parametermenge (221) der zweiten Parameterklasse (220) zu überführen.

6. Vorrichtung (100) gemäß Anspruch 5, wobei der Prozessor (130) ferner dazu ausgebildet ist, eine weitere gespeicherte Fahrzeugkonfiguration von einer Prädiktion auszuschließen, wenn die weitere gespeicherte Fahrzeugkonfiguration durch den ersten Ausstattungsparameter (140), den dritten Ausstattungsparameter und einen der zweiten Parameterklasse (220) zugeordneten, von der Teilmenge (222) der Parametermenge (221) der zweiten Parameterklasse (220) ausgeschlossenen weiteren Ausstattungsparameter charakterisiert ist.

7. Vorrichtung (100) gemäß einem der vorangegangenen Ansprüche, wobei die Schnittstelle (110) ferner dazu ausgebildet ist, ein Abfragesignal (180) mit Informationen über die den ersten Ausstattungsparameter umfassende Parametermenge an den Nutzer bereitzustellen.

8. Vorrichtung (100) gemäß einem der vorangegangenen Ansprüche, wobei der Prozessor (130) ferner ausgebildet ist, ein Korrektursignal zu empfangen, und in Folge des Korrektursignal die Korrelation des von dem Nutzer gewünschten ersten Ausstattungsparameters (140) und wenigstens des zweiten Ausstattungsparameters zu verändern.

9. System, umfassend eine Vorrichtung (100) gemäß einem der vorangegangenen Ansprüche und ein programmierbares Gerät (150), wobei das programmierbare Gerät (150) eine weitere Schnittstelle (160) umfasst, welche dazu ausgebildet ist, den ersten Ausstattungsparameter (140) an die Schnittstelle (110) bereitzustellen, und die prädizierte Fahrzeugkonfiguration (180) von dem Prozessor (130) zu empfangen.

10. Verfahren (400) zum Konfigurieren eines Fahrzeugs, umfassend:
Empfangen (410) wenigstens eines von einem Nutzer gewünschten ersten Ausstattungsparameters des Fahrzeugs;
Speichern (420) einer Mehrzahl zulässiger Fahrzeugkonfigurationen, wobei eine zulässige Fahrzeugkonfiguration durch eine Mehrzahl miteinander kombinierbarer Ausstattungsparameter des Fahrzeugs charakterisiert ist; und
Prädizieren (430) einer potentiell vom Nutzer gewünschten Fahrzeugkonfiguration aus der Mehrzahl zulässiger Fahrzeugkonfigurationen, basierend auf einer Korrelation des von dem Nutzer gewünschten ersten Ausstattungsparameters und wenigstens einem zweiten Ausstattungsparameter, wobei die potentiell vom Nutzer gewünschte Fahrzeugkonfiguration durch den von dem Nutzer gewünschten ersten Ausstattungsparameter und wenigstens den zweiten Ausstattungsparameter charakterisiert ist.

11. Programm mit einem Programmcode zum Durchführen des Verfahrens gemäß Anspruch 10, wenn der Programmcode auf einem Computer, einem Prozessor oder einer programmierbaren Hardwarekomponente ausgeführt wird.
